# EUROPEAN PATENT SPECIFICATION

(11) **EP 3 006 368 B1**
(45) Date of publication and mention of the grant of the patent: **17.06.2020**
(21) Application number: 14804046.2
(22) Date of filing: 28.05.2014
(51) Int. Cl.: B65D 65/38, C08K 5/159, C08K 5/523, C08L 23/00

(54) **POLYOLEFIN RESIN PACKAGING MATERIAL**
POLYOLEFINHARZ-VERPACKUNGSMATERIAL
MATÉRIAU D'EMBALLAGE À BASE DE RÉSINE POLYOLÉFINE

(30) Priority: 31.05.2013 JP 2013115466
(43) Date of publication of application: 13.04.2016
(73) Proprietor: Adeka Corporation, Tokyo 116-0012 (JP)
(72) Inventor: SAKAI, Atsushi, Saitama-shi Saitama 336-0022 (JP); TANJI, Naoko, Saitama-shi Saitama 336-0022 (JP); KAWAMOTO, Naoshi, Saitama-shi Saitama 336-0022 (JP)
(74) Representative: Gill Jennings & Every LLP
(86) International application number: PCT/JP2014/064138
(87) International publication number: WO 2014/192813

(56) References cited:
- JP-A- H 083 364
- JP-A- H0 748 473
- JP-A- H07 278 448
- JP-A- 2002 105 257
- JP-A6- H0 827 323
- US-A1- 2011 105 657
- DATABASE CA [Online] CHEMICAL ABSTRACTS SERVICE, COLUMBUS, OHIO, US; SATO, TOSHIAKI ET AL: "Organic phosphate-containing isotactic polypropene compositions and containers therefrom", XP002765721, retrieved from STN Database accession no. 113:153949 -& JP H02 102242 A (CHISSO CORP., JAPAN) 13 April 1990 (1990-04-13)

## Description

### TECHNICAL FIELD

The present invention relates to the use of a polyolefin resin packaging material having excellent clarity and heat resistance as well as low-contamination and low-odor properties to form an electrical/electronic component transport case.

### BACKGROUND ART

Polyolefin-based resins are inexpensive and have excellent processability and light weight properties; therefore, they are widely used in packaging materials such as food packaging containers and wardrobe cases.

However, since polyolefin-based resins are clearer than acrylic resins and styrene-based resins, there are problems that, for example, when they are made into thick molded articles such as wardrobe cases, the contents therein are not clearly seen, while thin molded articles thereof have insufficient strength and are thus deformed when stacked on top of each other.

In addition, in food packaging applications, it is required that the physical properties be maintained over a broad temperature range so that the molded articles can handle refrigeration and heating by a microwave oven. Particularly, in recent years, since utilization of dish washers exposes the molded articles to high temperature and high humidity conditions, a high resistance to such use environment is required.

Moreover, in food products and electronic components, adhesion of a volatile substance originating from a packaging material may affect the taste of the content, cause an offensive smell and/or influence the operation of an electronic device or the like; therefore, it is required that the packaging material have low-contamination properties. Furthermore, for the protection of the content against deterioration by oxidation and corrosion due to moisture, it is also necessary that the packaging material have gas barrier properties.

Conventionally, for an improvement of the physical properties of polyolefin-based resins such as clarity and impact resistance strength as well as shortening of the molding cycle, as a nucleating agent or a clarifying agent, the use of a metal benzoate, an aromatic metal phosphate, a dibenzylidene sorbitol compound, a metal (bi)cycloalkane dicarboxylate or the like has been examined.

Patent Document 1 proposes a polypropylene-based packaging film comprising a clarifying agent, MILLAD NX8000 manufactured by Milliken & Company, as a dibenzylidene sorbitol-based clarifying agent. Patent Documents 2 and 3 disclose clear thin-walled molded articles of 1 mm or less in thickness that comprise a dibenzylidene sorbitol-based clarifying agent.

### RELATED ART DOCUMENTS

### PATENT DOCUMENTS

Patent Document 1: Japanese Unexamined Patent Application Publication No. 2010-24428
Patent Document 2: Japanese Unexamined Patent Application Publication No. 2010-248438
Patent Document 3: Japanese Unexamined Patent Application Publication No. 2010-254874

### SUMMARY OF THE INVENTION

### PROBLEMS TO BE SOLVED BY THE INVENTION

The method described in Patent Document 1 aims at producing a polypropylene-based film having excellent clarity and gloss with an improved odor; however, no disclosure is made with regard to the heat resistance. The method described in Patent Document 2 was devised for attaining clarity and low odor and inhibiting deformation (warping) of the resulting molded article; however, no disclosure is made with regard to the heat resistance and low-contamination properties. Patent Document 3 shows that the molded illumination cover thereof has excellent clarity and deflection temperature under load (°C); however, no disclosure is made with regard to the odor and low-contamination properties. JPH02-102242 A discloses organic phosphate-containing isotactic polypropene compositions and rigid transparent containers formed therefrom. US 2011/105657 A1 discloses a polyolefin resin composition demonstrating high transparency even when the polyolefin resin has a high melt flow rate (MFR). The polyolefin resin can be molded into sheets, rods, bottles and vessels. JPH08-27323 A6 discloses a polyolefin resin composition for use in transparent packaging and containers. JPH08-3364 A discloses a crystalline synthetic resin composition having improved transparency and mechanical properties.

In view of the above, an object of the present invention is to use a polyolefin resin packaging material having excellent clarity, heat resistance, bleed resistance and low-odor properties to form an electrical/electronic component transport case.

### MEANS FOR SOLVING THE PROBLEMS

The present inventors intensively studied to solve the above-described problems and discovered that, the above-described problems can be solved by use of a polyolefin-based resin composition according to claim 1.

In the polyolefin resin packaging material for use in forming an electrical/electronic component transport case, it is preferred that the blending ratio of the compound represented by the Formula (1) and the compound represented by the Formula (2), the compound represented by the Formula (1)/the compound represented by the Formula (2), be 20/1 to 1/4.

The polyolefin resin packaging material for use in forming an electrical/electronic component transport case is suitable as a clear thin-walled molded article.

The polyolefin resin packaging material for use in forming an electrical/electronic component transport case is suitable as a clear thick-walled molded article.

### EFFECTS OF THE INVENTION

According to the present invention, use of a polyolefin resin packaging material having excellent clarity and heat resistance as well as low-contamination and low-odor properties to form an electrical/electronic component transport case can be provided.

### MODE FOR CARRYING OUT THE INVENTION

The polyolefin resin packaging material for use in forming an electrical/electronic component transport case will now be described in detail.

Examples of the polyolefin-based resin used in the polyolefin resin packaging material for use in forming an electrical/electronic component transport case include α-olefin polymers such as low-density polyethylenes, linear low-density polyethylenes, high-density polyethylenes, isotactic polypropylenes, syndiotactic polypropylenes, hemi-isotactic polypropylenes, cycloolefin polymers, stereo block polypropylenes, poly-3-methyl-1-butene, poly-3-methyl-1-pentene and poly-4-methyl-1-pentene; and α-olefin copolymers such as ethylene/propylene block or random copolymers.

The method of producing the polyolefin-based resin for use in forming an electrical/electronic component transport case is not particularly restricted and the polyolefin-based resin can be produced by a known method. A Ziegler catalyst, a Ziegler-Natta catalyst, a metallocene catalyst and a variety of other polymerization catalysts can be used. If desired, a co-catalyst, a catalyst carrier and/or a chain transfer agent may also be used. Further, the polyolefin-based resin can be produced by appropriately selecting, in various polymerization methods such as vapor-phase polymerization, solution polymerization, emulsion polymerization and bulk polymerization, the polymerization conditions such as temperature, pressure, concentration, flow rate and removal of catalyst residue that yield a resin having physical properties suitable for a packaging material or a resin having physical properties suitable for molding of a packaging material. The properties of the polyolefin-based resins, such as number-average molecular weight, weight-average molecular weight, molecular weight distribution, melt flow rate, melting point, melting peak temperature, stereoregularity (e.g., isotacticity or syndiotacticity), presence/absence and degree of branching, specific gravity, ratio of a component(s) dissolving in various solvents, haze, gloss, impact strength, bending modulus of elasticity and Olsen rigidity, as well as whether or not the respective physical property values satisfy a specific formula, can be appropriately selected such that the polyolefin-based resin have properties suitable for a packaging material or suitable for molding of a packaging material.

Among the above-described polyolefin-based resins, polypropylene resins in which the nucleating agents used in the present invention show a prominent effect are preferred and, for example, polypropylene, an ethylene/propylene block or random copolymer, a non-ethylene α-olefin/propylene block or random copolymer, and a mixture of these propylene-based polymers and other α-olefin polymer can be particularly preferably used.

The polyolefin resin packaging material for use in forming an electrical/electronic component transport case is characterized by comprising, as nucleating agents: 0.01 to 0.5 parts by mass of a benzylidene sorbitol compound represented by the Formula (1) and 0.01 to 0.5 parts by mass of an alkali metal salt of aromatic organic phosphoric acid ester, which is represented by the Formula (2), with respect to 100 parts by mass of the polyolefin-based resin.

Examples of the alkyl group having 1 to 4 carbon atoms represented by R¹, R², R³, R⁴ and R in the Formula (1) include a methyl group, an ethyl group, a propyl group, an isopropyl group, a butyl group, a *sec*-butyl group, a *tert*-butyl group and an isobutyl group.

Examples of the halogen atom represented by R¹, R², R³ and R⁴ in the Formula (1) include fluorine, chlorine, bromine and iodine.

Examples of the benzylidene sorbitol compound which is represented by the Formula (1) and used in the present invention include the following compounds. However, the present invention is not restricted by the following compounds.

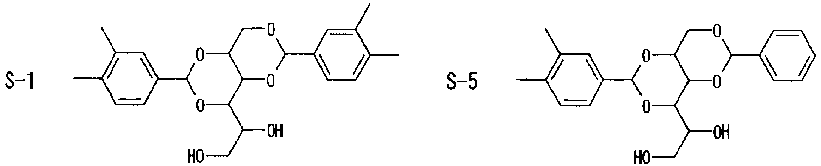

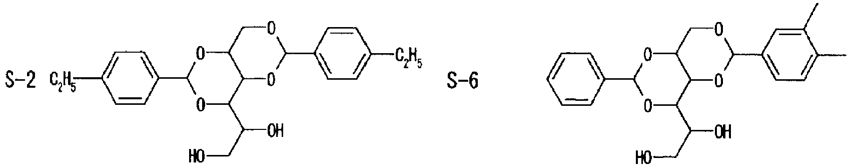

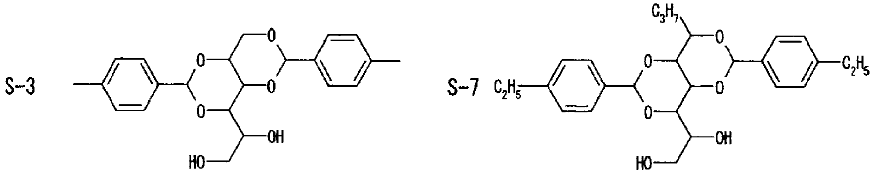

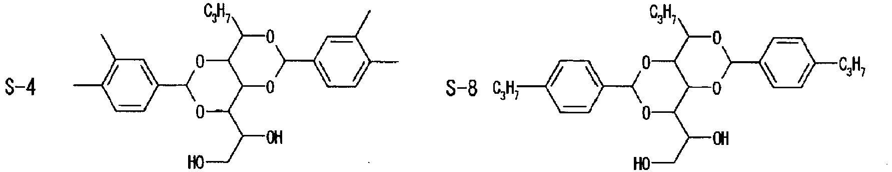

Examples of the alkyl group having 1 to 8 carbon atoms represented by R⁵ to R⁸ in the Formula (2) include, in addition to the alkyl groups exemplified above, a pentyl group, a *tert*-pentyl group, a hexyl group, a heptyl group, an octyl group, an isooctyl group, a *tert*-octyl group and a 2-ethylhexyl group, among which a *tert*-butyl group is particularly preferred.

Examples of the cycloalkyl group having 6 to 12 carbon atoms represented by R⁵ to R⁸ in the Formula (2) include a cyclohexyl group, a cycloheptyl group, a cyclooctyl group, a cyclononyl group and a cyclodecyl group, and the hydrogen atoms in the cycloalkyl group are optionally substituted with an alkyl group, an alkoxy group, an alkenyl group, an alkenyloxy group, a hydroxy group or a cyano group.

Examples of the aryl group having 6 to 12 carbon atoms represented by R⁵ to R⁸ in the Formula (2) include a phenyl group and a naphthyl group, and the aryl group is optionally substituted with an alkyl group, an alkoxy group, a halogen atom, a hydroxy group, a nitro group, a cyano group or an amino group.

Examples of the alkylaryl group or arylalkyl group having 6 to 12 carbon atoms which is represented by R⁵ to R⁸ in the Formula (2) include those groups in which any of the above-described alkyl groups and any of the above-described aryl groups are linked together.

Examples of the alkylidene group having 1 to 4 carbon atoms represented by R⁹ in the Formula (2) include a methylidene group, an ethylidene group, a propylidene group and a butylidene group. These alkylidene groups are optionally substituted with an alkyl group.

Examples of the alkali metal represented by M in the Formula (2) include lithium, sodium and potassium, among which sodium and lithium are particularly preferred.

Examples of the alkaline earth metal represented by M in the Formula (2) include beryllium, magnesium, calcium, strontium, barium and radium, among which calcium and magnesium are particularly preferred.

Examples of the metal phosphate represented by the Formula (2) include the following compounds. However, the present invention is not restricted by the following compounds.

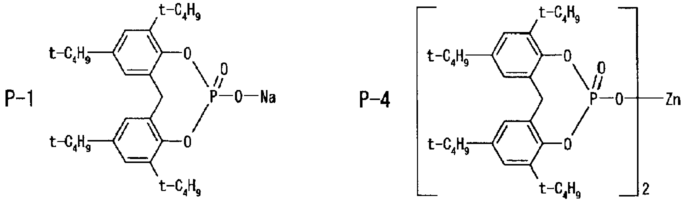

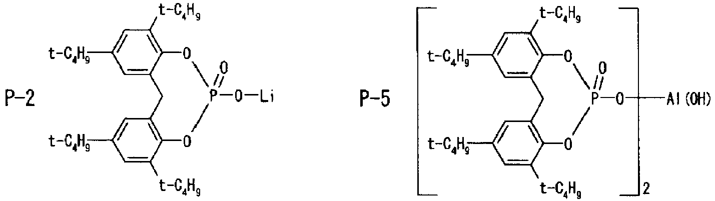

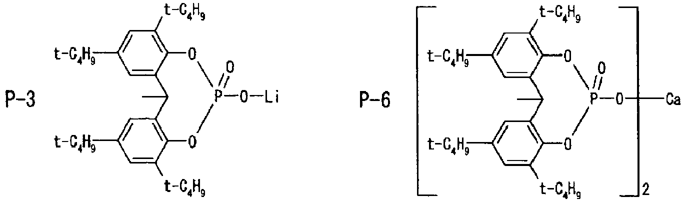

In the present invention, it is preferred that the benzylidene sorbitol compound represented by the Formula (1) and the metal phosphate represented by the Formula (2) be incorporated at a ratio, (1)/(2), of 20/1 to 1/4. When the ratio is higher than this range, the resulting molded article may not have sufficient clarity.

Further, in the polyolefin resin packaging material for use in forming an electrical/electronic component transport case, in addition to the compounds represented by the Formula (1) or (2), other additive(s) may also be added in such a range that does not impair the effects of the present invention.

Examples of such other additives include a phenolic antioxidant, a phosphorus-based antioxidant, a thioether-based antioxidant, an ultraviolet absorber, a hindered amine compound, a flame retardant, a nucleating agent other than those represented by the Formula (1) or (2), a filler, a lubricant, an antistatic agent, a heavy metal inactivator, a metallic soap, a hydrotalcite, a pigment, a dye, a plasticizer, an anti-blocking agent and a mineral oil.

Examples of the phenolic antioxidant include 2,6-di-*tert*-butyl-4-ethylphenol, 2-*tert*-butyl-4,6-dimethylphenol, styrenated phenol, 2,2'-methylene-bis(4-ethyl-6-*tert*-butylphenol), 2,2'-thiobis-(6-*tert*-butyl-4-methylphenol), 2,2'-thiodiethylene-bis[3-(3,5-di-*tert*-butyl-4-hydroxyphenyl)propionate], 2-methyl-4,6-bis(octylsulfanylmethyl)phenol, 2,2'-isobutylidene-bis(4,6-dimethylphenol), isooctyl-3-(3,5-di-*tert*-butyl-4-hydroxyphenyl)propionate, *N,N*'-hexane-1,6-diylbis[3-(3,5-di-*tert*-butyl-4-hydroxyphenyl)propionamide, 2,2'-oxamide-bis[ethyl-3-(3,5-di-*tert*-butyl-4-hydroxyphenyl)propionate], 2-ethylhexyl-3-(3',5'-di-*tert*-butyl-4'-hydroxyphenyl)propionate, 2,2'-ethylene-bis(4,6-di-*tert*-butylphenol), 3,5-bis(1,1-dimethylethyl)-4-hydroxy-benzenepropanoate, C13-15 alkyl esters, 2,5-di-*tert*-amylhydroquinone, hindered phenol polymer (AO.OH998 (trade name), manufactured by ADEKA Palmarole), 2,2'-methylene-bis[6-(1-methylcyclohexyl)-*p*-cresol], 2-*tert*-butyl-6-(3-*tert*-butyl-2-hydroxy-5-methylbenzyl)-4-methylphenyl acrylate, 2-[1-(2-hydroxy-3,5-di-*tert*-pentylphenyl)ethyl]-4,6-di-*tert*-pentylphenyl acrylate, 6-[3-(3-*tert*-butyl-4-hydroxy-5-methyl)propoxy]-2,4,8,10-tetra-*tert*-butylbenzo[d,f][1,3,2]-dio xaphosphepin, hexamethylene-bis[3-(3,5-di-*tert*-butyl-4-hydroxyphenyl)propionate, calcium bis[monoethyl(3,5-di-*tert*-butyl-4-hydroxybenzyl)phosphonate, a reaction product between 5,7-bis(1,1-dimethylethyl)-3-hydroxy-2(3*H*)-benzofuranone and o-xylene, 2,6-di-*tert*-butyl-4-(4,6-bis(octylthio)-1,3,5-triazine-2-ylamino)phenol, DL-α-tocophenol (vitamin E), 2,6-bis(α-methylbenzyl)-4-methylphenol, bis[3,3-bis-(4'-hydroxy-3'-*tert*-butyl-phenyl)butyric acid]glycol ester, 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-di-*tert*-butyl-4-hydroxybenzyl thioacetate, thiodiethylene-bis[(3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-*s*-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(2,6-di-*tert*-butylphenol), 4,4'-butylidene-bis(6-*tert*-butyl-3-methylphenol), 2,2'-ethylidene-bis(4,6-di-*tert*-butylphenol), 1,1,3-tris(2-methyl-4-hydroxy-5-*tert*-butylphenyl)butane, bis[2-*tert*-butyl-4-methyl-6-(2-hydroxy-3-*tert*-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3',5'-di-*tert*-butyl-4'-hydroxyphenyl)propionate]methane, 2-*tert*-butyl-4-methyl-6-(2-acryloyloxy-3-*tert*-butyl-5-methylbenzyl)phenol, 3,9-bis[2-(3-*tert*-butyl-4-hydroxy-5-methylhydrocinnamoyloxy)-1,1-dimethylethyl]-2,4,8,10-t etraoxaspiro[5.5]undecane, and triethylene glycol-bis[β-(3-*tert*-butyl-4-hydroxy-5-methylphenyl)propionate].

Examples of the phosphorus-based antioxidant include diisooctyl phosphite, heptakis triphosphite, triisodecyl phosphite, diphenyl phosphite, diphenyl isooctyl phosphite, diisooctylphenyl phosphite, diphenyl tridecyl phosphite, triisooctyl phosphite, trilauryl phosphite, tris(dipropylene glycol)phosphite, diisodecyl pentaerythritol diphosphite, dioleyl hydrogen phosphite, trilauryl trithiophosphite, bis(tridecyl)phosphite, tris(isodecyl)phosphite, tris(tridecyl)phosphite, diphenyldecyl phosphite, dinonylphenyl-bis(nonylphenyl)phosphite, poly(dipropylene glycol)phenyl phosphite, tetraphenyldipropyl glycol diphosphite, trisnonylphenyl phosphite, tris(2,4-di-*tert*-butylphenyl)phosphite, tris(2,4-di-*tert*-butyl-5-methylphenyl)phosphite, tris[2-*tert*-butyl-4-(3-*tert*-butyl-4-hydroxy-5-methylphenylthio)-5-methylphenyl]phosphite, tridecyl phosphite, octyldiphenyl phosphite, di(decyl)monophenyl phosphite, distearyl pentaerythritol diphosphite, a mixture of distearyl pentaerythritol and calcium stearate, alkyl(C10) bisphenol-A phosphite, di(tridecyl)pentaerythritol diphosphite, di(nonylphenyl)pentaerythritol diphosphite, bis(2,4-di-*tert*-butylphenyl)pentaerythritol diphosphite, bis(2,6-di-*tert-*butyl-4-methylphenyl)pentaerythritol diphosphite, bis(2,4,6-tri-*tert*-butylphenyl)pentaerythritol diphosphite, bis(2,4-dicumylphenyl)pentaerythritol diphosphite, tetraphenyl-tetra(tridecyl)pentaerythritol tetraphosphite, bis(2,4-di-*tert*-butyl-6-methylphenyl)ethyl phosphite, tetra(tridecyl)isopropylidene diphenol diphosphite, tetra(tridecyl)-4,4'-*n*-butylidene-bis(2-*tert*-butyl-5-methylphenol)diphosphite, hexa(tridecyl)-1,1,3-tris(2-methyl-4-hydroxy-5-*tert*-butylphenyl)butane triphosphite, tetrakis(2,4-di-*tert*-butylphenyl)biphenylene diphosphonite, 9,10-dihydro-9-oxa-10-phosphaphenanthrene-10-oxide, (1-methyl-1-propanyl-3-ylidene)-tris(2-1,1-dimethylethyl)-5-methyl-4,1-phenylene)hexatride cyl phosphite, 2,2'-methylene-bis(4,6-*tert*-butylphenyl)-2-ethylhexyl phosphite, 2,2'-methylene-bis(4,6-di-*tert*-butylphenyl)-octadecyl phosphite, 2,2'-ethylidene-bis(4,6-di-*tert*-butylphenyl)fluorophosphite, 4,4'-butylidene-bis(3-methyl-6-*tert*-butylphenylditridecyl)phosphite, tris(2-[(2,4,8,10-tetrakis-*tert*-butyldibenzo[d,f][1,3,2]dioxaphosphepin-6-yl)oxy]ethyl)amine, 3,9-bis(4-nonylphenoxy)-2,4,8,10-tetraoxa-3,9-diphosphaspiro[5,5]undecane, 2,4,6-tri-*tert*-butylphenyl-2-buty1-2-ethyl-1,3-propanediol phosphite, poly-4,4'-isopropylidene diphenol C12-15 alcohol phosphite, and phosphite of 2-ethyl-2-butylpropylene glycol and 2,4,6-tri-*tert*-butylphenol.

Examples of the thioether-based antioxidant include tetrakis[methylene-3-(laurylthio)propionate]methane, bis(methyl-4-[3-*n*-alkyl(C12/C14)thiopropionyloxy]-5-*tert*-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-*tert*-butyl-*m*-cresol), 2,2'-thiobis(6-*tert*-butyl-*p*-cresol) and distearyl disulfide.

Examples of the ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylene-bis(2-hydroxy-4-methoxybenzophenone); 2-(2-hydroxyphenyl)benzotriazoles such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylene-bis(4-*tert*-octyl-6-benzotriazolylphenol), polyethylene glycol ester of 2-(2-hydroxy-3-*tert*-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-*tert*-butylphenyl]benzotriazole, 2-[2-hydroxy-3-(2-methacryloyloxyethyl)-5-*tert*-octylphenyl]benzotriazole, 2-[2-hydroxy-3-(2-methacryloyloxyethyl)-5-*tert*-butylphenyl]-5-chlorobenzotriazole, 2-[2-hydroxy-5-(2-methacryloyloxyethyl)phenyl]benzotriazole, 2-[2-hydroxy-3-*tert*-butyl-5-(2-methacryloyloxyethyl)phenyl]benzotriazole, 2-[2-hydroxy-3-*tert*-amyl-5-(2-methacryloyloxyethyl)phenyl]benzotriazole, 2-[2-hydroxy-3-*tert*-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C12 to 13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenyl salicylate, resorcinol monobenzoate, 2,4-di-*tert*-butylphenyl-3,5-di-*tert*-butyl-4-hydroxybenzoate, octyl(3,5-di-*tert*-butyl-4-hydroxy)benzoate, dodecyl(3,5-di-*tert*-butyl-4-hydroxy)benzoate, tetradecyl(3,5-di-*tert*-butyl-4-hydroxy)benzoate, hexadecyl(3,5-di-*tert*-butyl-4-hydroxy)benzoate, octadecyl(3,5-di-*tert*-butyl-4-hydroxy)benzoate and behenyl(3,5-di-*tert*-butyl-4-hydroxy)benzoate; substituted oxanilides such as 2-ethyl-2'-ethoxyoxanilide and 2-ethoxy-4'-dodecyloxanilide; cyanoacrylates such as ethyl-α-cyano-β,β-diphenyl acrylate and methyl-2-cyano-3-methyl-3-(*p*-methoxyphenyl)acrylate; and various metal salts and metal chelates, particularly salts and chelates of nickel and chromium.

Examples of the hindered amine compound include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)-di(tridecyl)-1,2,3,4-butane tetracarboxylate, bis(l,2,2,6,6-pentamethyl-4-piperidyl)-di(tridecyl)-1,2,3,4-butane tetracarboxylate, bis(1,2,2,4,4-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-*tert*-octylamino-*s*-triazin e polycondensate, 1,5,8,12-tetrakis[2,4-bis(*N*-butyl-*N-*(2,2,6,6-tetramethyl-4-piperidyl)amino)-s-triazine-6-yl]-1, 5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl] -1,5,8,12-tetraazadodecane, 1,6,11-tris[2,4-bis(*N*-butyl-*N-*(2,2,6,6-tetramethyl-4-piperidyl)amino)-*s*-triazine-6-yl]aminoun decane, 1,6,11-tris[2,4-bis(*N*-butyl-*N*-(1,2,2,6,6-pentamethyl-4-piperidyl)amino)-*s*-triazine-6-yl]amino undecane, bis {4-(1-octyloxy-2,2,6,6-tetramethyl)piperidyl} decanedionate and bis {4-(2,2,6,6-tetramethyl-1-undecyloxy)piperidyl} carbonate.

Examples of the flame retardant include aromatic phosphates such as triphenyl phosphate, tricresyl phosphate, trixylenyl phosphate, cresyldiphenyl phosphate, cresyl-2,6-xylenyl phosphate, resorcinol-bis(diphenylphosphate), (1-methylethylidene)di-4,1-phenylenetetraphenyl diphosphate, 1,3-phenylene-tetrakis(2,6-dimethylphenyl)phosphate, ADK STAB FP-500 (manufactured by ADEKA Corporation), ADK STAB FP-600 (manufactured by ADEKA Corporation) and ADK STAB FP-800 (manufactured by ADEKA Corporation); phosphonates such as divinyl phenylphosphonate, diallyl phenylphosphonate and (1-butenyl)phenylphosphonate; phosphinates such as phenyl diphenylphosphinate, methyl diphenylphosphinate and 9,10-dihydro-9-oxa-10-phosphaphenanthlene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds and red phosphorus; metal hydroxides such as magnesium hydroxide and aluminum hydroxide; and bromine-based flame retardants such as brominated bisphenol A-type epoxy resins, brominated phenol novolac-type epoxy resins, hexabromobenzene, pentabromotoluene, ethylene-bis(pentabromophenyl), ethylene-bis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate and brominated styrene. These flame retardants are preferably used in combination with a drip inhibitor such as a fluorocarbon resin and/or a flame retardant aid such as a polyhydric alcohol or hydrotalcite.

Examples of the nucleating agent other than those represented by the Formula (1) or (2) include metal carboxylates such as sodium benzoate, aluminum-4-*tert*-butylbenzoate, sodium adipate and 2-sodium-bicyclo[2.2.1]heptane-2,3-dicarboxylate; and amide compounds such as *N,N',N"*-tris[2-methylcyclohexyl]-1,2,3-propane tricarboxamide, *N,N',N"*-tricyclohexyl-1,3,5-benzene tricarboxamide, *N,N'*-dicyc|ohexyl-naphthalene dicarboxamide and 1,3,5-tri(dimethylisopropoylamino)benzene.

Preferable examples of the filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, silica, alumina, potassium titanate whiskers, wollastonite and fibrous magnesium oxysulfate. Among these fillers, those having an average particle size (in the case of a spherical or plate-form filler) or an average fiber diameter (in the case of a needle-form or fibrous filler) of 5 µm or less are preferred.

The lubricant is added for the purposes of imparting the surface of the resulting molded article with lubricity and improving the damage-preventing effect. Examples of such lubricant include unsaturated fatty acid amides such as oleic acid amide and erucic acid amide; saturated fatty acid amides such as behenic acid amide and stearic acid amide; butyl stearate; and silicone oils.

The antistatic agent is added for the purposes of reducing the electrostaticity of the resulting molded article and inhibiting dust adhesion caused by electrostatic charge. Examples of such antistatic agent include cationic, anionic and non-ionic antistatic agents. Preferred examples thereof include polyoxyethylene alkylamines, polyoxyethylene alkylamides, fatty acid esters thereof, and glycerin fatty acid esters.

The amount of such other additives to be used in the present invention is preferably in the range of from an amount at which the effect of the addition is exerted to an amount at which an improvement in the effect of the addition is no longer observed. Preferred amounts of the respective additives to be used with respect to 100 parts by mass of a polyolefin-based resin are as follows: 0.1 to 20 parts by mass of a plasticizer(s), 1 to 50 parts by mass of a filler(s), 0.001 to 1 part by mass of a surface treatment agent(s), 0.001 to 10 parts by mass of a phenolic antioxidant(s), 0.001 to 10 parts by mass of a phosphorus-based antioxidant(s), 0.001 to 10 parts by mass of a thioether-based antioxidant(s), 0.001 to 5 parts by mass of a ultraviolet absorber(s), 0.01 to 1 part by mass of a hindered amine compound(s), 1 to 50 parts by mass of a flame retardant(s), 0.03 to 2 parts by mass of a lubricant(s), and 0.03 to 2 parts by mass of an antistatic agent(s). These additives may be used individually, or two or more thereof may be used in combination.

The polyolefin resin packaging material for use in forming an electrical/electronic component transport case can be molded into various shapes by conventionally known various molding methods such that the resulting molded article has physical properties suitable as a packaging material.

Examples of the shapes include those of packaging materials that are conventionally and usually used, such as a sheet shape, a cylindrical shape, a bottle shape and a box shape.

As the molding method, for example, a method in which, after mixing with stirring the polyolefin-based resin, the nucleating agents represented by the Formulae (1) and (2) and an additive(s) to be added as required using a mixer, the resulting mixture is melt-kneaded and extruded into a pellet using an extruder and this pellet is then molded by extrusion molding, injection molding, compression molding, sheet molding, blow molding, vacuum molding, rotomolding or the like to obtain a desired molded article is usually employed. Alternatively, these components may be directly molded without the pelletization step, and a molding method such as casting can also be employed as appropriate. Further, a masterbatch is prepared by concentrating the components to be added at a high concentration and a molded article can be produced with an addition of this masterbatch during the molding process.

The clear thin-walled molded article, which is a preferred mode of the polyolefin resin packaging material for use in forming an electrical/electronic component transport case, is a molded article of 1 mm or less in thickness which is obtained by injection molding using a known injection molding machine, and examples of such a molded article include those of about 0.1 to 1 mm in thickness. By reducing the thickness, weight reduction of the molded article can be easily achieved, which greatly contributes to material and resource conservation. Moreover, since the molded article can be easily cooled in the molding step, the molding cycle can be largely shortened, so that energy saving can be achieved. These enable to greatly reduce the burden on the environment. On the other hand, a reduction in the thickness of a molded article leads to a reduction in the rigidity; therefore, it is indispensable to impart the molded article with rigidity. However, since the clear thin-walled molded article has excellent physical properties, the polyolefin resin packaging material for use in forming an electrical/electronic component transport case can be easily reduced in thickness as an injection molded article.

The clear thick-walled molded article, which is also a preferred mode of the polyolefin resin packaging material for use in forming an electrical/electronic component transport case, is a molded article of more than 1 mm in thickness which is obtained by injection molding using a known injection molding machine and, in cases where a clear material is desired, the molded article has a thickness of, for example, 5 mm or less. Generally speaking, when a molded article has a large thickness, since the cooling rate is different between the surface and the interior of the molded article in the molding step, large crystals of polyolefin are generated inside the molded article and the clarity of the molded article is thereby reduced. However, by incorporating a dibenzylidene sorbitol compound represented by the Formula (1) and a metal phosphate represented by the Formula (2) at a specific ratio, the crystallization rate of the polyolefin is markedly improved, making the difference in the crystallization rate of the polyolefin between the interior and the surface of the resulting molded article small, and a thick-walled molded article having excellent clarity can be obtained as a result.

Examples of the above-described electrical/electronic component transport case include members and chassis of electrical appliances, semiconductor transport containers, those of optical components, various information medium cases and solar cell sealants.

### EXAMPLES

The present invention will now be described more concretely by way of examples thereof; however, the present invention is not restricted to the following examples and the like by any means.

Using a Henschel mixer (FM200; manufactured by Mitsui Mining Co., Ltd.), 100 parts by mass of an ethylene/propylene random copolymer having a melt flow rate of 8 g/10 min as a polyolefin-based resin was mixed with 0.026 parts by mass of di(*t*-butylperoxy)diisopropylbenzene as a peroxide, 0.1 parts by mass of tetrakis[methylene-3-(3',5'-di-*tert*-butyl-4'-hydroxyphenyl)propionate]methane as a phenolic antioxidant, 0.1 parts by mass of tris(2,4-di-*tert*-butylphenyl)phosphite as a phosphorus-based antioxidant, 0.05 parts by mass of calcium stearate and 0.2 parts by mass of the respective nucleating agent compositions shown in Table 1 below, at 1,000 rpm for 1 minute. Then, using a uniaxial extruder (OEX3024; manufactured by DDM Co., Ltd.), the resulting mixtures were each extruded under processing conditions of a temperature of 240°C and a screw speed of 30 rpm to produce a pellet. The thus obtained pellets all had a melt flow rate of 42 g/10 min. These pellets were subjected to the below-described evaluations. In Table 1 below, the symbols used for the nucleating agent composition each corresponds to the above-exemplified benzylidene sorbitol compound represented by the Formula (1) or metal phosphate represented by the Formula (2).

### (Haze)

Using an injection molding machine (EC100-2A; manufactured by Toshiba Machine Co., Ltd.), the thus obtained pellets were each filled into a die for 40 seconds at an injection temperature of 200°C and an injection pressure of 70 to 80 MPa and subsequently cooled for 20 seconds in the die at 40°C. The resultant was then injection-molded under conditions for drawing a sheet from the die, thereby obtaining a 1 mm-thick square sheet of 60 mm × 60 mm in size. Immediately thereafter, this sheet was left to stand in an incubator having an inner temperature of 23°C for at least 48 hours, and the haze of the test piece was determined using Haze Guard II (manufactured by Toyo Seiki Seisaku-sho, Ltd.). A lower haze value indicates superior clarity of the test piece. The results thereof are shown in Table 1 below.

### (Deflection Temperature under Load)

Using an injection molding machine (EC100-2A; manufactured by Toshiba Machine Co., Ltd.), the pellets obtained above were each filled into a die for 40 seconds at an injection temperature of 200°C and an injection pressure of 70 to 80 MPa and subsequently cooled for 20 seconds in the die at 40°C. The resultant was then injection-molded under conditions for drawing a sheet from the die to prepare a test piece of 80 mm × 10 mm × 4 mm in size, and the deflection temperature under load (HDT) of the test piece was measured in accordance with ISO 75 (load: 0.45 MPa). The results thereof are shown in Table 1 below.

### (Odor Property)

A rating sensory evaluation was conducted in accordance with JIS Z9080: Sensory Analysis. To a 6-L polyethylene terephthalate sachet, 100 g of a 500 µm-thick film prepared in advance by press-molding each of the pellets obtained above was added along with odorless air obtained through active carbon and, after storing the sachet for 7 days at a room temperature of 23°C and a humidity of 50%, sensory evaluation of the air inside the sachet was performed by five panelists. An evaluation "×" was given when a strong odor was sensed; an evaluation "Δ" was given when an odor was sensed; and an evaluation "○" was given when no odor was sensed. The results thereof are shown in Table 1 below.

### (Bleed Resistance)

The bleed resistance was evaluated based on the difference between the haze value measured for a 500 µm-thick film, which was prepared by press-molding each of the pellets obtained above and storing the resultant for 7 days in a 80°C Geer oven, and the haze value measured after washing the film surface with ethanol. A larger value means a greater amount of bleeding, while a smaller value means superior bleed resistance. This evaluation can be used as an index of the appropriateness for the use in a case where long-term storage is required. The results thereof are shown in Table 1 below.

**[Table 1]**

| | Nucleating agent composition | | | | Evaluation | | | |
|---|---|---|---|---|---|---|---|---|
| | Benzylidene sorbitol compound | Amount [parts by mass] | Metal phosphate | Amount [parts by mass] | Haze [%] | Deflection temperature under load [°C] | Odor property | Bleed resistance |
| Example 1 | S-1 | 0.1 | P-2 | 0.1 | 8.3 | 70.1 | ○ | 8.8 |
| Comparative Example 1 | S-1 | 0.2 | - | - | 9.8 | 70.0 | Δ | 10.6 |
| Comparative Example 2 | S-8 | 0.2 | - | - | 10.0 | 68.5 | Δ | 12.7 |
| Comparative Example 3 | S-3 | 0.2 | - | - | 8.8 | 69.0 | × | 9.3 |

According to the results of Comparative Examples 1 to 3, in the molded articles comprising only a benzylidene sorbitol compound represented by the Formula (1), the clarity, heat resistance and bleed resistance were not satisfactory and generation of an odor was observed. On the other hand, the molded article of the present invention comprising a benzylidene sorbitol compound represented by the Formula (1) and a metal phosphate represented by the Formula (2) at a specific ratio was confirmed to have a low-odor property and exhibit excellent clarity, heat resistance and low-contamination property. The polyolefin resin packaging material for use in forming an electrical/electronic component transport case exhibits excellent low-contamination property under a high-temperature environment.

## Claims

1. Use of a polyolefin-based resin composition to form an electrical/electronic component transport case, which is obtained by injection molding, said polyolefin-based resin composition comprising, with respect to 100 parts by mass of a polyolefin-based resin:
0.01 to 0.5 parts by mass of a benzylidene sorbitol compound represented by the following Formula (1): 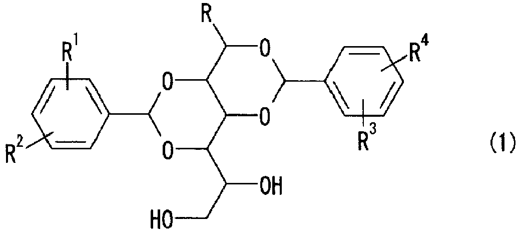 wherein, R represents a hydrogen atom or an alkyl group having 1 to 4 carbon atoms; and R¹, R², R³ and R⁴ each independently represent a hydrogen atom, a halogen atom, a cyano group or an alkyl group having 1 to 4 carbon atoms; and
0.01 to 0.5 parts by mass of a metal phosphate represented by the following Formula (2): 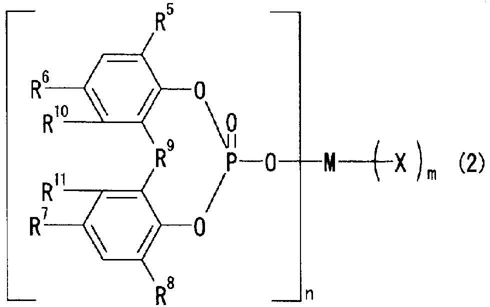 wherein, R⁵ and R⁸ each independently represent an alkyl group having 1 to 8 carbon atoms, or a cycloalkyl, aryl, alkylaryl or arylalkyl group having 6 to 12 carbon atoms; R⁶ and R⁷ each independently represent a hydrogen atom, an alkyl group having 1 to 8 carbon atoms, or a cycloalkyl, aryl, alkylaryl or arylalkyl group having 6 to 12 carbon atoms; R⁹ represents a direct bond or an alkylidene group having 1 to 4 carbon atoms; R¹⁰ and R¹¹ each independently represent a hydrogen atom or a methyl group; M represents an atom of an alkali metal, an alkaline earth metal, zinc or aluminum; n represents an integer of 1 to 3; m represents an integer of 0 to 2; when M is an alkali metal, n is 1 and m is 0; when M is an alkaline earth metal or zinc, X is a hydroxy group and m is 1 if n is 1, and m is 0 if n is 2; and when M is aluminum, m is 2 if n is 1, m is 1 if n is 2, with X being a hydroxy group in both of these cases, and m is 0 if n is 3.

2. Use of a polyolefin-based resin compositon according to claim 1, wherein the blending ratio of said compound represented by said Formula (1) and said compound represented by said Formula (2), said compound represented by said Formula (1)/said compound represented by said Formula (2), is 20/1 to 1/4.

3. Use of a polyolefin-based resin composition according to claim 1 or 2, wherein the polyolefin-based resin is selected from α-olefin polymers, such as low-density polyethylenes, linear low-density polyethylenes, high-density polyethylenes, isotactic polypropylenes, syndiotactic polypropylenes, hemi-isotactic polypropylenes, cycloolefin polymers, stereo block polypropylenes, poly-3-methyl-1-butene, poly-3-methyl-1-pentene and poly-4-methyl-1-pentene; and α-olefin copolymers such as ethylene/propylene block or random copolymers.

4. Use of a polyolefin-based resin composition according to claim 3, wherein the polyolefin-based resin is selected from polypropylene, an ethylene/propylene block or random copolymer, a non-ethylene α-olefin/propylene block or random copolymer, and a mixture of these propylene-based polymers and other α-olefin polymer.

## Patentansprüche

1. Verwenden einer Harzzusammensetzung auf Polyolefinbasis zum Formen eines Transportkoffers für elektrische/elektronische Komponenten, der durch Spritzgussverfahren erhalten wird, wobei die genannte Harzzusammensetzung auf Polyolefinbasis in Bezug auf 100 Massenteile eines Harzes auf Polyolefinbasis Folgendes umfasst:
0,01 bis 0,5 Massenteile einer Benzylidensorbitolverbindung, die durch die folgende Formel (1) repräsentiert wird: 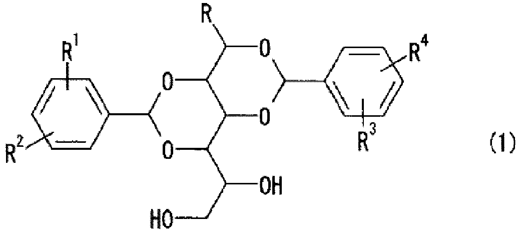 wobei R ein Wasserstoffatom oder eine Alkylgruppe mit 1 bis 4 Kohlenstoffatomen repräsentiert; und R¹, R², R³ und R⁴ jeweils unabhängig ein Wasserstoffatom, ein Halogenatom, eine Cyangruppe oder eine Alkylgruppe mit 1 bis 4 Kohlenstoffatomen repräsentieren; und
0,01 bis 0,5 Massenteilen eines Metallphosphats, das durch die folgende Formel (2) repräsentiert wird: 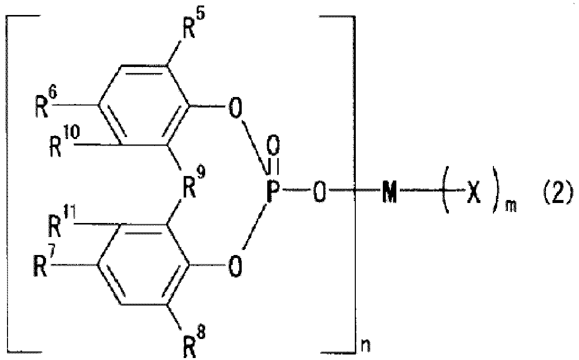 wobei R⁵ und R⁸ jeweils unabhängig eine Alkylgruppe mit 1 bis 8 Kohlenstoffatomen oder eine Cycloalkyl-, Aryl-, Alkylaryl- oder Arylalkylgruppe mit 6 bis 12 Kohlenstoffatomen repräsentieren; R⁶ und R⁷ jeweils unabhängig ein Wasserstoffatom, eine Alkylgruppe mit 1 bis 8 Kohlenstoffatomen oder eine Cycloalkyl-, Aryl- Alkylaryl- oder Arylalkylgruppe mit 6 bis 12 Kohlenstoffatomen repräsentieren; R⁹ eine direkte Bindung oder eine Alkylidengruppe mit 1 bis 4 Kohlestoffatomen repräsentiert; R¹⁰ und R¹¹ jeweils unabhängig ein Wasserstoffatom oder eine Methylgruppe repräsentieren; M ein Atom eines Alkalimetalls, eines Erdalkalimetalls, von Zink oder von Aluminium repräsentiert; n eine Ganzzahl von 1 bis 3 repräsentiert; m eine Ganzzahl von 0 bis 2 repräsentiert; wenn M ein Alkalimetall ist, n 1 ist und m 0 ist; wenn M ein Erdalkalimetall oder Zink ist, X eine Hydroxygruppe ist und m 1 ist, wenn n 1 ist, und m 0 ist, wenn n 2 ist; und wenn M Aluminium ist, m 2 ist, wenn n 1 ist, m 1 ist, wenn n 2 ist, wobei X in beiden Fällen eine Hydroxygruppe ist und m 0 ist, wenn n 3 ist.

2. Verwenden einer Harzzusammensetzung auf Polyolefinbasis entsprechend Anspruch 1, wobei das Mischverhältnis der genannten Verbindung, die durch die genannte Formel (1) repräsentiert wird, und der genannten Verbindung, die durch die genannten Formel (2) repräsentiert wird, d.h. genannte Verbindung durch genannte Formel (1) repräsentiert/genannte Verbindung durch genannte Formel (2) repräsentiert, 20/1 bis 1/4 ist.

3. Verwenden einer Harzzusammensetzung auf Polyolefinbasis entsprechend Anspruch 1 oder 2, wobei das Harz auf Polyolefinbasis aus α-Olefinpolymeren, wie Polyethylenen niedriger Dichte, Linearpolyethylenen niedriger Dichte, Polyethylenen hoher Dichte, isotaktischen Polypropylenen, syndiotaktischen Polypropylenen, hemi-isotaktischen Polypropylenen, Cycloolefinpolymeren, Stereoblock-Polypropylenen, Poly-3-Methyl-1-Buten, Poly-3-Methyl-1-Penten und Poly-4-Methyl-1-Penten und α-Olefincopolymeren, wie Block- oder statistischen Ethylen-/Propylencopolymeren, ausgewählt wird.

4. Verwenden einer Harzzusammensetzung auf Polyolefinbasis entsprechend Anspruch 3, wobei das Harz auf Polyolefinbasis aus Polypropylen, einem Block- oder statistischem Ethylen-/Propylencopolymer, einem Block- oder statistischem Nicht-Ethylen-α-Olefin-/Propylencopolymer und einer Mischung dieser Polymere auf Propylenbasis und einem anderem α-Olefinpolymer ausgewählt wird.

## Revendications

1. Utilisation d'une composition de résine à base de polyoléfine pour former une mallette de transport de composants électriques/électroniques, laquelle est obtenue par moulage par injection,
ladite composition de résine à base de polyoléfine comprenant, pour 100 parties en masse d'une résine à base de polyoléfine :
0,01 à 0,5 partie en masse d'un composé de sorbitol de benzylidène représenté par la Formule (1) ci-après : 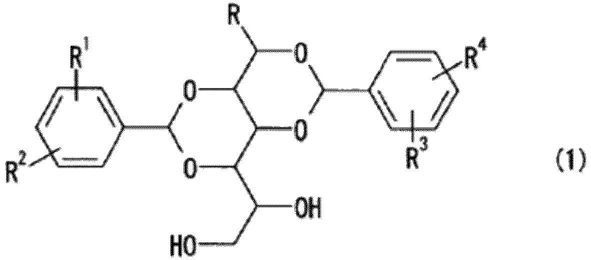 dans laquelle,
R représente un atome d'hydrogène ou un groupe alkyle ayant 1 à 4 atomes de carbone ; et
R¹, R², R³ et R⁴ représentent chacun indépendamment un atome d'hydrogène, un atome d'halogène, un groupe cyano ou un groupe alkyle ayant 1 à 4 atomes de carbone ; et
0,01 à 0,5 partie en masse d'un phosphate de métal représenté par la Formule (2) ci-après : 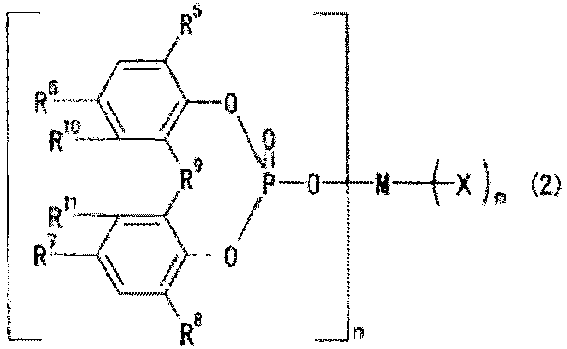 dans laquelle,
R⁵ et R⁸ représentent chacun indépendamment un groupe alkyle ayant 1 à 8 atomes de carbone, ou un groupe cycloalkyle, aryle, alkylaryle ou arylalkyle ayant 6 à 12 atomes de carbone ;
R⁶ et R⁷ représentent chacun indépendamment un atome d'hydrogène, un groupe alkyle ayant 1 à 8 atomes de carbone, ou un groupe cycloalkyle, aryle, alkylaryle ou arylalkyle ayant 6 à 12 atomes de carbone ;
R⁹ représente une liaison directe ou un groupe alkylidène ayant 1 à 4 atomes de carbone ;
R¹⁰ et R¹¹ représentent chacun indépendamment un atome d'hydrogène ou un groupe méthyle ;
M représente un atome d'un métal alcalin, un métal alcalino-terreux, un zinc ou un aluminium ;
n représente un nombre entier de 1 à 3 ;
m représente un nombre entier de 0 à 2 ;
quand M est un métal alcalin, n est 1 et m est 0 ;
quand M est un métal alcalino-terreux ou un zinc, X est un groupe hydroxy et m est 1 si n est 1, et m est 0 si n est 2 ; et
quand M est un aluminium, m est 2 si n est 1, m est 1 si n est 2, avec X étant un groupe hydroxy dans ces deux cas, et m est 0 si n est 3.

2. Utilisation d'une composition de résine à base de polyoléfine selon la revendication 1, dans laquelle le rapport de mélange dudit composé représenté par ladite Formule (1) et dudit composé représenté par ladite Formule (2), dudit composé représenté par ladite Formule (1)/dudit composé représenté par ladite Formule (2), est de 20/1 à 1/4.

3. Utilisation d'une composition de résine à base de polyoléfine selon la revendication 1 ou 2, dans laquelle la résine à base de polyoléfine est sélectionnée parmi des polymères de α-oléfine, tels que des polyéthylènes à faible densité, des polyéthylènes à faible densité, linéaires, des polyéthylènes à haute densité, des polypropylènes isotactiques, des polypropylènes syndiotactiques, des polypropylènes hémi-isotactiques, des polymères de cyclooléfine, des polypropylènes séquencés stéréo, un poly-3-méthyl-1-butène, un poly-3-méthyl-1-pentène et un poly-4-méthyl-1-pentène ; et des copolymères de α-oléfine tels que des copolymères séquencés ou statistiques d'éthylène/propylène.

4. Utilisation d'une composition de résine à base de polyoléfine selon la revendication 3, dans laquelle la résine à base de polyoléfine est sélectionnée parmi un polypropylène, un copolymère séquencé ou statistique d'éthylène/propylène, un copolymère propylène séquencé ou statistique de α-oléfine non-éthylène et un mélange de ces polymères à base de propylène et autre polymère de α-oléfine.
